# EUROPÄISCHE PATENTSCHRIFT

(11) **EP 0 833 432 B1**
(45) Veröffentlichungstag und Bekanntmachung des Hinweises auf die Patenterteilung: **20.03.2002**
(21) Anmeldenummer: 97115141.0
(22) Anmeldetag: 02.09.1997
(51) Int. Cl.: H02P 5/418, H02P 5/168

(54) **Drehzahl-Steuerung zur Speisung eines Gleichstrom-Universalmotors**
Speed control to supply DC universal motors
Commande de vitesse pour l'alimentation d'un moteur universel à courant continu

(30) Priorität: 25.09.1996 DE 19639310; 06.11.1996 DE 19645667
(43) Veröffentlichungstag der Anmeldung: 01.04.1998
(73) Patentinhaber: Diehl AKO Stiftung & Co. KG, 88239 Wangen im Allgäu (DE)
(72) Erfinder: Weinmann, Martin, 88339 Bad Waldsee (DE)
(74) Vertreter: Hofmann, Gerhard, Dipl.-Ing. Patentassessor

(56) Entgegenhaltungen:
- DE-A- 4 305 477
- GUILLEMIN P: "UNIVERSAL MOTOR CONTROL FOR FUZZY LOGIC" FUZZY SETS AND SYSTEMS, Bd. 63, Nr. 3, 10. Mai 1994, Seiten 339-348, XP000446526

## Beschreibung

Die Erfindung betrifft eine Drehzahl-Steuerschaltung zur Speisung eines Gleichstrom-Universalmotors, insbes. zum Antrieb einer Waschmaschine.

In der modernen Waschtechnik muß der Motor einen großen Drehzahlbereich abdecken, von langsamen Waschdrehzahlen bis hin zu hohen Schleuderdrehzahlen für eine gute Entwässerung der Wäsche.

Dies kann zum einen durch Feldschwächung am Motor erreicht werden, indem die Feldwicklung des Motors von "langes Feld" auf "kurzes Feld" umgeschaltet wird, wie dies beispielsweise aus DE 43 05 477 A1 bekannt ist. Bei langem Feld arbeitet der Motor mit einer Waschdrehzahl von etwa 300 Motorumdrehungen pro Minute, während bei kurzem Feld der Motor mit einer Schleuderdrehzahl, beispielsweise 12000 Motorumdrehungen pro Minute arbeitet.

Mit einer elektronischen Regeleinrichtung, die einen Leistungsschalter, beispielsweise ein IGBT (Insolated Gate Bipolar Transistor) zur Regelung der Motorspannung ansteuert, kann die Motordrehzahl reguliert werden, wobei ein an der Ankerwelle des Motors sitzender Tachogenerator der Regeleinrichtung den Istwert anzeigt. Das Ein-Aus-Verhältnis des Leistungsschalters bestimmt die am Motor anliegende mittlere Gleichspannung und steuert so die Drehzahl.

Zum anderen kann, wie ebenfalls in der DE 43 05 477 A1 beschrieben, zwecks Drehzahl-Bereichserweiterung die an einem die Netzwechselspannung beziehenden Gleichrichter angeschlossene Glättungskapazität von zwei zueinander in Reihe liegenden Kondensatoren gebildet sein derart, daß zur Verdoppelung der Betriebsspannung die elektronische Regeleinrichtung den Verbindungspunkt der Kondensatoren an einen Abgriff des Brückengleichrichters so schaltet, daß die positiven Netzhalbwellen den einen Kondensator und die negativen Netzhalbwellen den anderen Kondensator aufladen.

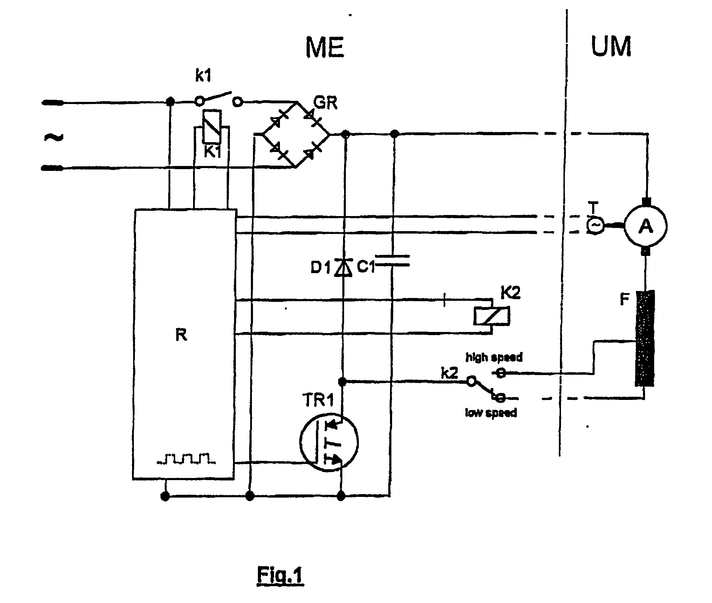

Bei dem in Fig. 1 gezeigten Stand der Technik wird, wie bei Drehzahl-Steuerschaltungen zur Ansteuerung eines Gleichstrom-Universalmotors allgemein üblich, gemäß der Topologie eines Tiefsetzstellers gearbeitet. Die die Drehzahl-Steuerschaltung ME speisende Wechselspannung wird über einen Gleichrichter GR zur Speisung des Gleichstrom-Universalmotors UM gleichgerichtet. Die Drehzahl-Steuerschaltung ME regelt über eine Regeleinrichtung R die Motorspannung gemäß der Ist-Signale von einem an der Ankerwelle A sitzenden Tachogenerator T auf die gewünschte Soll-Drehzahl. Der Gleichstrom-Universalmotor UM weist außer dem rotierenden Anker A mit Kommunator und Tachogenerator T die stationäre Feldwicklung F auf. Die Motorspannung wird aus der gleichgerichteten Netzspannung gemäß dem Einschaltverhältnis des Leistungsschalters TR1, der in der Topologie eines Tiefsetzstellers angeordnet ist, abgeleitet. Während der Einzeit des Leistungsschalters TR1 liegt die volle gleichgerichtete Netzspannung am Motor an, während in der Auszeit des Leistungsschalters TR1 der Motorstrom auf die Kommutierungsdiode D1 kommutiert und die an dem Motor anliegende Spannung damit gleich Null ist. Über das Einschaltverhältnis des Leistungsschalters TR1 kann die Motorspannung zwischen null bis maximal der gleichgerichteten Netzspannung geregelt werden und damit die Motordrehzahl. Bei einer vorteilhaft gewählten hohen Taktfrequenz für den Leistungsschalter TR1 überhalb des hörbaren Bereichs (>16 kHz) ergibt sich ein kontinuierlicher Motorstrom.

Zur Erweiterung des Drehzahlbereiches wird nach dem Stand der Technik zur Erreichung hoher Schleuderdrehzahlen, z.B. über 10.000 Motorumdrehungen pro Minute, die Feldwicklung F am Motor mit der Wirkung einer Feldschwächung über den elektrischen Kontakt k2 z.B. über die Spule K2 umgeschaltet.

Ein Gleichstrom-Universalmotor mit einer derartigen Feldumschaltung zur Feldschwächung am Motor ist teuer. Auch die Verdoppelung der Betriebsspannung mit Hilfe von zwei zueinander in Reihe liegenden Kondensatoren gemäß der DE 43 05 477 konnte nicht zufriedenstellen.

Ausgehend von einer Drehzahl-Steuerschaltung zur Speisung eines Gleichstrom-Universalmotors, insbesondere zum Antrieb einer Waschmaschine, wobei ein Gleichrichter und eine Glättungskapazität die Betriebsspannung des Motors aus der Netzwechselspannung ableiten und zur Steuerung der Drehzahl eine Regeleinrichtung vorgesehen ist, die eine einen Leistungsschalter und eine Kommutierungsdiode in der Topologie eines Tiefsetzstellers enthaltende Leistungsstufe für den Motor steuert, liegt daher der Erfindung die Aufgabe zugrunde, eine Alternative zur Drehzahlerweiterung zu schaffen, bei welcher der Motor mit Spannungen gespeist werden kann, die deutlich über der die Drehzahl-Steuerschaltungen speisenden Netzspannung liegen.

Die Aufgabe wird erfindungsgemäß dadurch gelöst, daß die den Motor speisende Leistungsstufe eine Leistungsdrossel umfaßt und daß die Leistungsstufe von der Topologie eines Tiefsetzstellers auf die Topologie eines Hochsetzstellers umschaltbar ist.

Mit diesen Merkmalen liegen die Spannungen des Motors nicht nur deutlich über der Netzspannung der Drehzahl-Steuerschaltung, sondern der Motor kann auch mit kleineren Strömen gespeist werden, so daß sich im Waschbetrieb die Verlustleistung in den Halbleiter-Leistungsschaltem reduziert und die damit verbundene geringere Strombelastung des Kommutators einen positiven Einfluß auf die Lebensdauer des Motors zur Folge hat. Die maximale Anhebung der Speisespannung für den Motor ist aber nicht auf die Verdoppelung der die Drehzahl-Steuerschaltung speisenden Netzspannung begrenzt, sondern kann noch weiter angehoben werden. Dies hat den Vorteil, daß einerseits der geforderte große Drehzahlbereich auch ohne eine Feldschwächung am Motor erreicht werden kann und daß andererseits derselbe Antrieb mit einem großen Eingangsspannungsbereich von etwa 110 V bis 240 V nominal bei Beibehaltung des großen Drehzahlbereiches gespeist werden kann. Ohne die Begrenzung der maximalen Motorspannung auf die Netzspannung ergibt sich ferner die Möglichkeit, den Motor in bezug auf Lebensdauer und Leistungsgewicht weiter zu optimieren, indem er mit größeren Spannungen und kleineren Strömen betrieben wird.

Zweckmäßige Ausführungen gemäß der Erfindung sind in den Unteransprüchen angegeben. Dabei ist hervorzuheben, daß gemäß der Erfindung ein Gleichspannungskondensator C1 in einem Zwischenkreis der Leistungsstufe vorgesehen ist, der die Gleichspannung nur im Frequenzbereich der Taktfrequenz des Leistungsschalters mit > 16 kHz glätten muß und nicht im Bereich der Netzspannungsfrequenz, wodurch sich der Aufwand für den Netzfilter zur Einhaltung der IEC 555 (Netzrückwirkung durch Stromoberwellen) erheblich reduziert, da die Netzstromaufnahme nahezu sinusförmig verläuft.

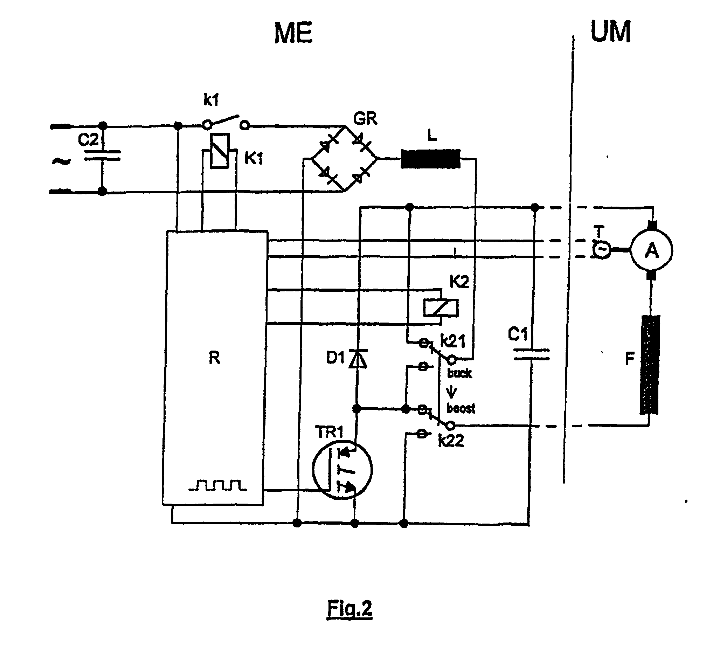

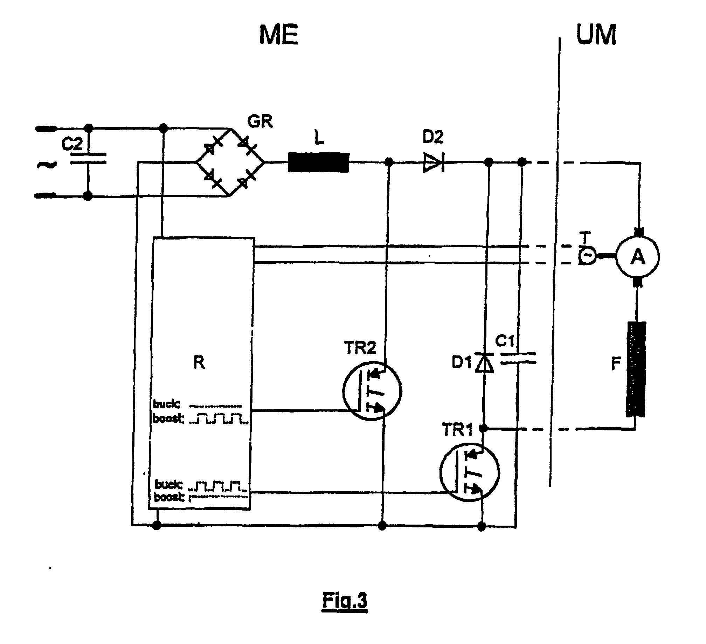

Die Erfindung wird nun an zwei Ausführungsbeispielen anhand der Figuren 2 und 3 näher erläutert.

Die in der nachfolgenden Beschreibung wie auch weiter oben verwendeten Topologiebezeichnungen von Hochsetzsteller (Boost-Converter) sowie Tiefsetzsteller (Buck-Converter) sind Standardschaltungen für Schaltnetzteile und in einschlägigen Nachschlagewerken wie z.B. im "Das große Werkbuch Elektronik"/"Franzis-Verlag, Ausgabe 1994, S. 2933 ff. beschrieben. Nicht zu verwechseln ist damit die Standardschaltung des Tiefsetz-Hochsetzstellers (Buck-boost-Converter), wie in der oben genannten Literatur ebenfalls aufgeführt. Bei der Erfindung handelt es sich vielmehr um eine für den Antrieb von Waschmaschinen günstige Kombination bzw. Modifikation bekannter Topologien. Bei der hier mit Tiefsetzsteller bezeichneten Topologie besteht die Ausgangsstufe nur aus einer Induktivität in Form eines Gleichstrom-Universalmotors mit Freilaufdiode.

Wie nach dem Stand der Technik gemäß Fig. 1 wird bei den erfindungsgemäßen Ausführungsformen gemäß Figuren 2 und 3, die ebenfalls die Topologie eines Tiefsetzstellers zeigen, die Motorspannung gemäß dem Einschaltverhältnis des Leistungsschalters TR1 aus der gleichgerichteten Netzspannung abgeleitet. In der Topologie eines Tiefsetzstellers liegt der Motor (UM) in Reihe mit dem aktiven Leistungsschalter TR1, über dessen Einschaltverhältnis sich die Motorspannung zwischen Null und der gleichgerichteten Netzspannung regeln läßt. Die elektrischen Kontakte k21, k22, die von einer Wicklung K2 beaufschlagt werden können, befinden sich dabei in der in Fig. 2 gezeigten Ruhestellung. In dieser Topologie wird, wie nach dem Stand der Technik (obige Beschreibung nach Fig. 1) der Motor UM bei niedrigen Motorspannungen, d.h. geringe Drehzahlen (waschen) geregelt. Soll der Motor UM auf eine hohe Drehzahl hochgeregelt werden, muß er mit einer entsprechend höheren Spannung gespeist werden.

Dies wird erfindungsgemäß dadurch erreicht, daß die Kontakte k21, k22 in Fig. 2 mit Hilfe der Wicklung K2 umgeschaltet werden derart, daß nunmehr eine Hochsetzdrossel L in Reihen mit dem aktiven Leistungsschalter TR1 liegt, wie es aus Fig. 2 hervorgeht, so daß dann die Motorspannung über das Einschaltverhältnis des aktiven Leistungsschalters und dem daraus resultierenden Strom in der Hochsetzdrossel über den Betrag der gleichgerichteten Netzspannung hinaus angehoben werden kann. In dieser Topologie, in der sich die Leistungsstufe von Tiefsetzsteller auf Hochsetzsteller umgeschaltet befindet, liegt der Motor parallel zu einem Gleichspannungskondensator C1 und zum Leistungsschalter TR1 mit Diode D1. Die Hochsetzdrossel L führt vom Gleichrichter GR auf den Verbindungspunkt zwischen Diode D1 und Schalter TR1. Der über die Einzeit des Leistungsschalters TR1 in der Hochsetzdrossel L eingeprägte Strom kommutiert während der Auszeit desselben Schalters über die Kommutierdiode D1 auf den Gleichspannungskondensator C1. In dieser Topologie ist die Motorspannung mindestens gleich der gleichgerichteten Netzspannung und damit der Gleichstrom im Motor immer größer Null. Deshalb ist es zweckmäßig, vor dem Umschalten der Topologie vom Hochsetzsteller zum Tiefsetzsteller (über die Kontakte k21 und k22) die Leistungsstufe mit dem Gleichrichter GR über den Kontakt k1 im Wechselstromkreis vom Netz zu trennen, um zu verhindern, daß die Kontakte k21 und k22 durch das Schalten von Gleichströmen überbeansprucht werden.

Bei der erfindungsgemäßen Ausführungsform gemäß Fig. 3 sind, wie gezeigt, die Topologien von Tiefsetzsteller für kleine Motorspannungen und die Topologie von Hochsetzsteller für hohe Motorspannungen parallel ausgeführt. Ein Leistungsschalter TR1 mit Kommutierungsdiode D1 bildet den Tiefsetzsteller, während ein Leistungsschalter TR2 die Kommutierungsdiode D2 zusammen mit einer Hochsetzdrossel L den Hochsetzsteller bildet. Je nach Ansteuerung eines der Leistungsschalter TR1, TR2 befindet sich die Leistungsstufe in der Topologie eines Tiefsetzstellers oder eines Hochsetzstellers. Soll der Motor UM mit Spannungen kleiner als die gleichgerichtete Netzspannung gespeist werden, bleibt der Leistungsschalter TR2 geöffnet und der Leistungsschalter TR1 wird mit einem Einschaltverhältnis gemäß der wünschten Motorspannung getaktet. Soll der Motor UM mit Spannungen höher als die gleichgerichtete Netzspannung gespeist werden, bleibt der Leistungsschalter TR1 statisch aufgesteuert, und der Leistungsschalter TR2 wird mit einem Einschaltverhältnis gemäß der gewünschten Motorspannung getaktet.

Vorteilhaft an der Schaltungsanordnung gemäß Fig. 3 ist, daß kein schaltbarer Kontakt k1 gemäß Fig. 1 oder 2 zum Trennen der Leistungsstufe vom Netz notwendig ist, da ein unkontrollierter Hochlauf des Motors UM aufgrund eines Kurzschlusses im Leistungsschalter TR1 durch das statische Zuschalten des Leistungsschalters TR2 verhindert werden kann. Durch den durch das statische Zuschalten des Leistungsschalters TR2 verbundenen hohen Netzstrom kann über eine einfache Schmelzsicherung (nicht gezeichnet) die Leistungsstufe und damit der Motor UM vom Netz getrennt werden.

In beiden Ausführungen kann die Motorspannung kontinuierlich von Null mit Hilfe der Hochsetzdrossel L bis weit über den Betrag der Netzspannung hinaus beliebig geregelt werden, wenn die Topologie der Leistungsstufe der Drehzahl-Steuerschaltung ME in dem Arbeitspunkt, wo die Motorspannung der gleichgerichteten Netzspannung entspricht, von Tief- auf Hochsetzstellung umgeschaltet wird. Die Anhebung der Motorspannung ist nicht auf eine Verdoppelung der die Drehzahl-Steuerschaltung speisenden Netzspannung begrenzt, sondern kann noch weiter angehoben werden.

## Patentansprüche

1. Drehzahl-Steuerschaltung zur Speisung eines Gleichstrom-Universalmotors, insbesondere zum Antrieb einer Waschmaschine, wobei ein Gleichrichter und eine Glättungskapazität die Betriebsspannung des Motors aus der Netzwechselspannung ableiten und zur Steuerung der Drehzahl eine Regeleinrichtung vorgesehen ist, die eine einen Leistungsschalter (TR1) und eine Kommutierungsdiode (D1) in der Topologie eines Tiefsetzstellers enthaltende Leistungsstufe für den Motor steuert,
**dadurch gekennzeichnet,**
**daß** die den Motor speisende Leistungsstufe eine Hochsetzdrossel (L) umfaßt und von der Topologie eines Tiefsetzstellers auf die Topologie eines Hochsetzstellers umschaltbar ist.

2. Drehzahl-Steuerschaltung gemäß Anspruch 1,
**dadurch gekennzeichnet,**
**daß** die Leistungsstufe über elektrische Kontakte (K21,K22) zwischen der Topologie des Tiefsetzstellers und der Topologie des Hochsetzstellers umschaltbar ist (Fig. 2).

3. Drehzahl-Steuerschaltung gemäß Anspruch 2,
**dadurch gekennzeichnet,**
**daß** ein schaltbarer Kontakt (k1) zum Trennen der Leistungsstufe vom Netz vor dem Umschalten der Topologie vom Hochsetzsteller zum Tiefsetzsteller vorgesehen ist.

4. Drehzahl-Steuerschaltung gemäß Anspruch 1,
**dadurch gekennzeichnet,**
**daß** in der Leistungsstufe die Topologien des Tiefsetzstellers (TR1, D1) und des Hochsetzstellers (TR2, D2, L) parallel ausgeführt sind.

5. Drehzahl-Steuerschaltung nach einem der Ansprüche 1 bis 4,
**dadurch gekennzeichnet,**
**daß** im Zwischenkreis parallel zum Leistungsschalter (TR1/TR2) und der in Reihe mit dem Leistungsschalter liegenden Kommutierungsdiode (D1/D2) ein Gleichspannungskondensator (C1) vorgesehen ist.

## Claims

1. A rotational-speed control circuit for supplying a direct-current universal motor, particularly for driving a washing machine, in which a rectifier and a smoothing capacitor derive the operating voltage for the motor from the mains alternating voltage and for controlling the rotational speed a regulating device is provided, which controls a power stage for the motor, said power stage including a power switch (TR1) and a commutation diode (D1) in the topology of a low-setting regulator,
**characterized in that**
the power stage supplying the motor includes a high-setting choke (L) and can be switched over from the topology of a low-setting regulator to the topology of a high-setting regulator.

2. A rotational-speed control circuit according to Claim 1,
**characterized in that**
the power stage can be switched via electric contacts (K21, K22) between the topology of the low-setting regulator and the topology of the high-setting regulator (Fig. 2).

3. A rotational-speed control circuit according to Claim 2,
**characterized in that**
a switchable contact (k1) is provided for isolating the power stage from the mains prior to the switching over of the topology from the high-setting regulator to the low-setting regulator.

4. A rotational-speed control circuit according to Claim 1,
**characterized in that**
in the power stage the topologies of the low-setting regulator (TR1, D1) and of the high-setting regulator (TR2, D2, L) are parallel.

5. A rotational-speed control circuit according to one of Claims 1 to 4,
**characterized in that**
a direct voltage capacitor (C1) is provided in the intermediate circuit parallel to the power switch (TR1/TR2) and the commutation diode (D1/D2) lying in series with the power switch.

## Revendications

1. Circuit de commande de vitesse de rotation pour l'alimentation d'un moteur universel à courant continu, en particulier pour l'entraînement d'une machine à laver, dans lequel un redresseur et une capacité de lissage dérivent la tension de service du moteur de la tension alternative du réseau, et pour la commande de la vitesse de rotation est prévu un dispositif de régulation qui commande un étage de puissance pour le moteur, qui contient un interrupteur d'alimentation (TR1) et une diode de commutation (D1) dans la topologie d'un dispositif d'abaissement de la tension, **caractérisé en ce que** l'étage d'alimentation, qui alimente le moteur, comprend une bobine d'élévation de tension (L) et peut commuter de la topologie d'un dispositif à abaissement de tension à la topologie d'un dispositif à élévation de tension.

2. Circuit de commande de vitesse de rotation selon la revendication 1, **caractérisé en ce que** l'étage d'alimentation peut être commuté, par des contacts électriques (K21, K22) entre la topologie du dispositif à abaissement de tension et la topologie du dispositif à élévation de tension (fig. 2).

3. Circuit de commande de vitesse de rotation selon la revendication 1 ou 2, **caractérisé en ce qu'**un contact commutable (k1) est prévu pour séparer l'étage d'alimentation du secteur avant la commutation de la topologie du dispositif à élévation de tension au dispositif à abaissement de tension.

4. Circuit de commande de vitesse de rotation selon la revendication 1, **caractérisé en ce que** dans l'étage de puissance la topologie du dispositif à abaissement de tension (TR1, D1) et celle du dispositif à élévation de tension (TR2, D2, L) sont réalisées parallèles.

5. Circuit de commande de vitesse de rotation selon l'une des revendications 1 à 4, **caractérisé en ce que** dans le circuit intermédiaire il est prévu un condensateur de tension continue (C1) parallèlement à l'interrupteur d'alimentation (TR1/TR2) et à la diode de commutation (D1/D2), en série avec l'interrupteur d'alimentation.
